# FASCICULE DE BREVET EUROPEEN

(11) **EP 2 551 152 B1**
(45) Date de publication et mention de la délivrance du brevet: **24.02.2016**
(21) Numéro de dépôt: 12177569.6
(22) Date de dépôt: 24.07.2012
(51) Int. Cl.: B60P 7/08, B60J 5/06

(54) **Dispositif d'enroulement à commande manuelle d'un élément enroulable, tel qu'une bâche.**
Aufrollvorrichtung mit manueller Steuerung eines aufrollbaren Elements, wie einer Plane
Manually-controlled winding device of a winding element, such as a tarpaulin.

(30) Priorité: 28.07.2011 FR 1102370
(43) Date de publication de la demande: 30.01.2013
(73) Titulaire: Thiriet, 08000 Warcq (FR)
(72) Inventeur: Thiriet, Isabelle, 08000 Warcq (FR)
(74) Mandataire: Bureau Duthoit Legros Associés

(56) Documents cités:
- EP-A2- 1 900 569
- FR-A1- 2 814 448
- FR-A1- 2 819 501

## Description

L'invention est relative à un dispositif d'enroulement à commande manuelle d'un élément enroulable, tel qu'une bâche, autour d'un arbre d'enroulement.

L'invention trouvera une application particulière dans le domaine du transport de marchandises pour enrouler et tendre les bâches amovibles de caisses de véhicules, tels que camions ou remorques.

Dans ce domaine il est connu des caisses de véhicules équipées de bâches amovibles destinées à former les parois latérales de la caisse, et qui peuvent être retirées pour permettre le chargement ou le déchargement des marchandises du véhicule.

A cet effet, l'art antérieur connait des dispositifs d'enroulement à commande manuelle, connus sous l'appellation «tendeurs de bâche » qui permettent l'enroulement de la bâche autour d'un arbre d'enroulement, généralement extrudé, en aluminium. Les dispositifs des documents EP-0.616.968, FR-2.819.501 ou encore FR-2.814.448 en sont des exemples.

Ce dispositif d'enroulement permet, non seulement, l'enroulement complet de la bâche sur l'arbre d'enroulement lorsque la bâche est retirée, mais permet également de tendre la bâche lorsqu'elle forme la paroi latérale de la caisse du véhicule.

Bien souvent, un tel dispositif d'enroulement comprend un axe d'entraînement destiné à être assujetti audit arbre d'enroulement, un support fixe sur lequel est monté tourillonnant ledit axe d'entraînement, un organe de manoeuvre comprenant une poignée, destiné à être actionné par un opérateur pour enrouler et/ou tendre la bâche.

A cet effet, le dispositif comprend un mécanisme d'encliquetage apte à permettre la rotation dudit axe d'entraînement, dans un seul sens, lors de la mise en oscillation dudit organe de manoeuvre.

Ce mécanisme d'encliquetage comprend :
- une roue dentée, solidaire en rotation dudit axe d'entraînement, et une dent (ou un cliquet) solidaire de l'organe de manoeuvre, apte à engrener avec la denture de ladite roue dentée pour provoquer la rotation de l'axe d'entraînement suivant un premier sens (sens d'enroulement), ce cliquet (ou cette dent) étant apte à échapper à la denture de la roue dentée lors du retour de l'organe de manoeuvre, suivant un deuxième sens d'actionnement,
- un cliquet, à fonction d'anti-retour, solidaire dudit support fixe, apte à glisser sur ladite roue dentée lors de l'actionnement de l'organe de manoeuvre dans ledit premier sens d'actionnement, et apte à engager avec la denture de la roue dentée pour retenir l'axe d'entraînement lorsque l'organe de manoeuvre est actionné dans le sens de retour.

Un tel dispositif permet de tendre fortement la bâche pour former la paroi latérale de la caisse. Dans cette position, le cliquet anti-retour et le cliquet (ou la dent) de l'organe de manoeuvre engagent avec la roue dentée pour s'opposer au déroulement.

Lorsque la bâche doit être retirée, l'opérateur doit donc dégager, non seulement le cliquet anti-retour, mais également le cliquet (ou la dent) de l'organe de manoeuvre pour autoriser la libre rotation de l'axe d'entraînement et ainsi le déroulement de la bâche.

Jusqu'à aujourd'hui, à la connaissance de l'inventeur, cette opération de déverrouillage immobilise les deux mains de l'utilisateur pour respectivement actionner deux organes de commande, distincts. L'un des deux organes de commande permet le dégagement du cliquet anti-retour, tandis que l'autre permet le dégagement de la dent (ou du cliquet) de l'organe de manoeuvre.

Le but de la présente invention est de pallier les inconvénients précités en proposant un dispositif d'enroulement facilitant l'opération de libération de l'axe d'entraînement.

Plus particulièrement, le but de la présente invention est de proposer un dispositif d'enroulement dont l'axe d'entraînement peut être libéré d'une seule main.

Un autre but de l'invention est de proposer un tel dispositif, de conception simplifiée.

D'autres buts et avantages apparaîtront à la lecture de la description qui va suivre qui n'est donnée qu'à titre indicatif et qui n'a pas pour but de la limiter.

Aussi l'invention concerne un dispositif d'enroulement à commande manuelle d'un élément enroulable, tel qu'une bâche, autour d'un arbre d'enroulement, ledit dispositif comprenant :
- un axe d'entraînement, destiné à être assujetti audit arbre d'enroulement
- un support fixe sur lequel est monté tourillonnant ledit axe d'entraînement,
- un organe de manoeuvre comprenant un premier levier à fonction de poignée et un deuxième levier articulé, d'une part, audit premier levier suivant un premier axe de pivot, et d'autre part, audit axe d'entrainement suivant un deuxième axe de pivot d'axe confondu avec l'axe dudit axe d'entraînement,
- un mécanisme d'encliquetage .apte à permettre la rotation dudit axe d'entraînement dans un seul sens lors de la mise en oscillation dudit organe de manoeuvre, ledit mécanisme d'encliquetage comprenant :
   - une roue dentée solidaire en rotation dudit axe d'entraînement,
   - une dent solidaire rigidement dudit premier levier, apte à engrener avec la denture de ladite roue dentée, dans une première positon relative dudit premier levier par rapport audit deuxième levier, dite position d'engagement du premier levier, pour provoquer la rotation de l'axe d'entraînement suivant un premier sens d'actionnement de l'organe de manoeuvre, ladite dent étant apte à échapper la denture de la roue dentée dans une deuxième position relative dudit premier levier par rapport audit deuxième levier, dite position de débrayage dudit premier levier, dans un deuxième sens d'actionnement de l'organe de manoeuvre,
   - un cliquet, à fonction d'anti-retour, solidaire dudit support fixe, apte à glisser sur ladite roue dentée lors de l'actionnement de l'organe de manoeuvre dans ledit premier sens d'actionnement, et apte à engager avec la denture de la roue dentée pour retenir l'axe d'entraînement lorsque l'organe de manoeuvre est actionné dans le deuxième sens d'actionnement.

Selon le dispositif d'enroulement conforme à l'invention :
ledit organe de manoeuvre présente une position de moindre encombrement pour laquelle ledit organe de manoeuvre est rabattu sur ledit support fixe dans une position où la dent dudit premier levier s'engage avec la denture de ladite roue dentée,
et dans lequel le dispositif comprend un mécanisme de débrayage dudit mécanisme d'encliquetage comprenant:
   - un moyen de commande manuel dudit cliquet, apte à actionner ledit cliquet dans une position d'échappement où ledit cliquet échappe la denture de la roue dentée,
   - une came actionnée par ledit moyen de commande manuel dudit cliquet, apte, dans ladite position de moindre encombrement de l'organe de manoeuvre, à engager avec ledit premier levier pour provoquer l'échappement de la dent de la denture dudit pignon denté,
   de telle façon que dans ladite position de moindre encombrement de l'organe de manoeuvre, l'actionnement dudit moyen de commande manuel du cliquet provoque conjointement l'échappement de la dent et du cliquet de la denture de la roue dentée de telle façon à libérer en rotation l'axe d'enroulement.

Un tel dispositif permet ainsi la libération aisée de l'axe d'entraînement, alors que l'organe de manoeuvre est dans sa position de moindre encombrement. Cette opération est permise en actionnant, d'une seule main, ledit moyen de commande manuel dudit cliquet, ce qui provoquera conjointement, non seulement, l'échappement du cliquet anti-retour de la roue dentée, mais également l'échappement de la dent de ladite roue dentée.

Le dispositif d'enroulement conforme à l'invention peut, en outre présenter les caractéristiques facultatives suivantes, prises seules ou en combinaison :
- le cliquet et la came sont constitués par un même élément ;
- la conformation de la denture de la roue dentée est telle que l'actionnement dudit cliquet depuis sa position de retenue vers sa position d'échappement ne contraint pas le pignon dentée en rotation suivant le premier sens S1;
- le cliquet est monté pivotant par rapport au support fixe, un moyen ressort contraignant le cliquet en engagement avec la roue dentée;
- ledit moyen de commande manuel dudit cliquet est constitué d'une poignée solidaire dudit cliquet;
- le support fixe comprend deux flasques entre lesquelles sont logés la roue dentée et ledit cliquet;
- dans la position de moindre encombrement, l'organe de manoeuvre vient recouvrir ledit cliquet qui est alors inaccessible de l'extérieur ;
- ledit second levier comprend une partie concave, le dispositif présentant une lame ressort solidaire du support fixe, apte à engager avec ladite partie concave pour assurer le maintien stable de l'organe de manoeuvre dans ladite position de moindre encombrement ;
- le dispositif comprend une goupille et dans lequel lesdites flasques dudit support fixe présentent deux ouvertures de passage de la goupille permettant le positionnement de la goupille dans au moins une position où ladite goupille bloque ledit moyen de commande manuel du cliquet.
- la goupille permet de bloquer le moyen de commande manuel dudit cliquet dans une position de blocage où le cliquet bloque en rotation l'axe d'entraînement;
- la goupille permet de bloquer le moyen de commande manuel dudit cliquet dans une position de blocage où la dent et le cliquet laissent libre de rotation l'axe d'entraînement.

L'invention concerne également une caisse de véhicule de transport de marchandises équipée d'une bâche amovible et d'un dispositif d'enroulement à commande manuelle, conforme à l'invention, apte à permettre l'enroulement de ladite bâche autour d'un arbre d'enroulement et la mise en tension de la bâche.

L'invention sera mieux comprise à la lecture de la description suivante accompagnée des dessins en annexe parmi lesquels :

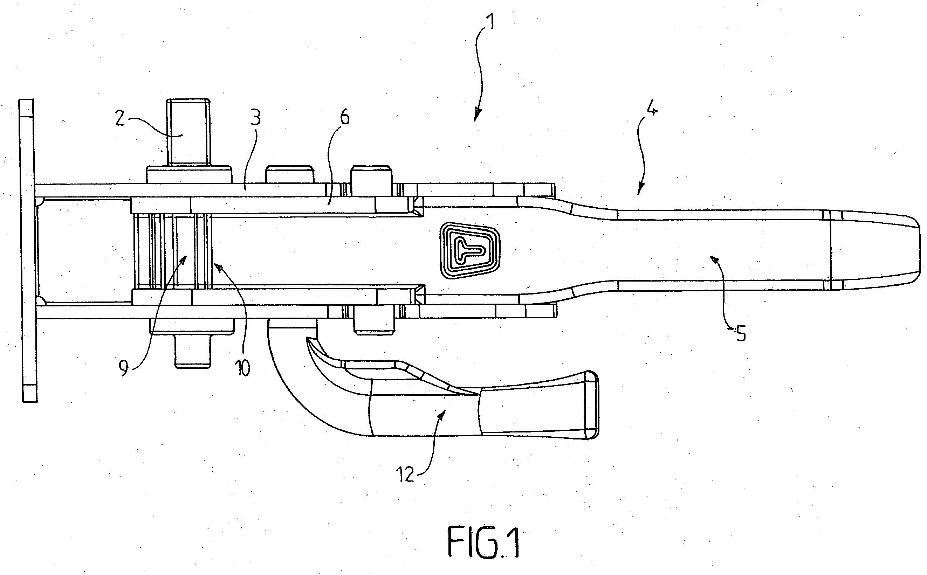

- la figure 1 est une vue de dessus d'un dispositif d'enroulement conforme à l'invention, selon un mode de réalisation,

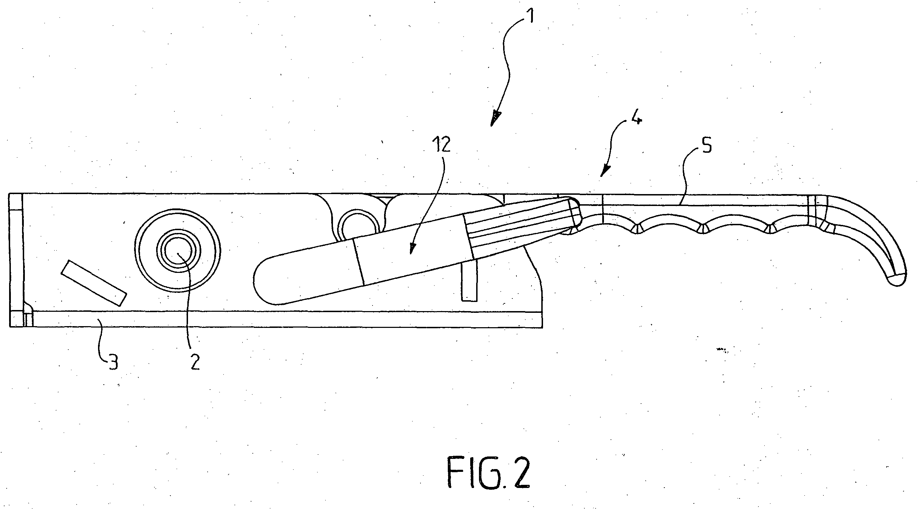

- la figure 2 est une vue de côté du dispositif tel qu'illustré à la figure 1,

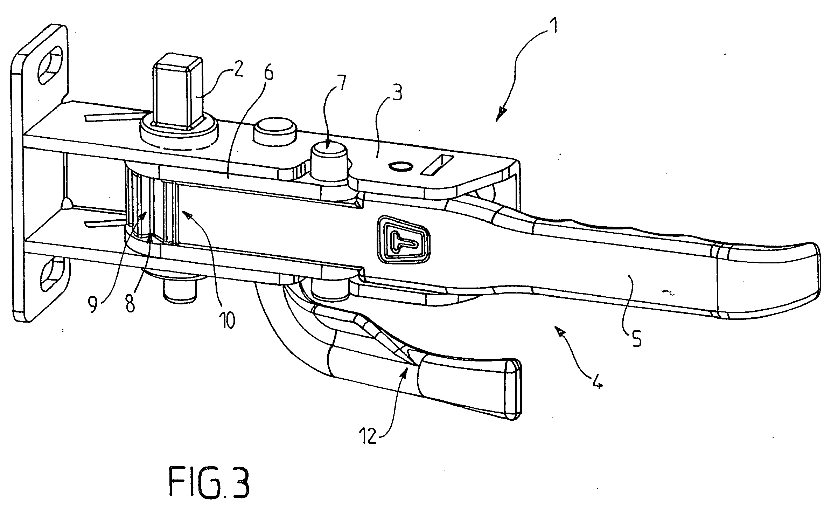

- la figure 3 est une vue en perspective du dispositif de la figure 1,
- la figure 4 est une vue selon une coupe longitudinale du dispositif de la figure 1, dans la position de moindre encombrement de l'organe de manoeuvre,

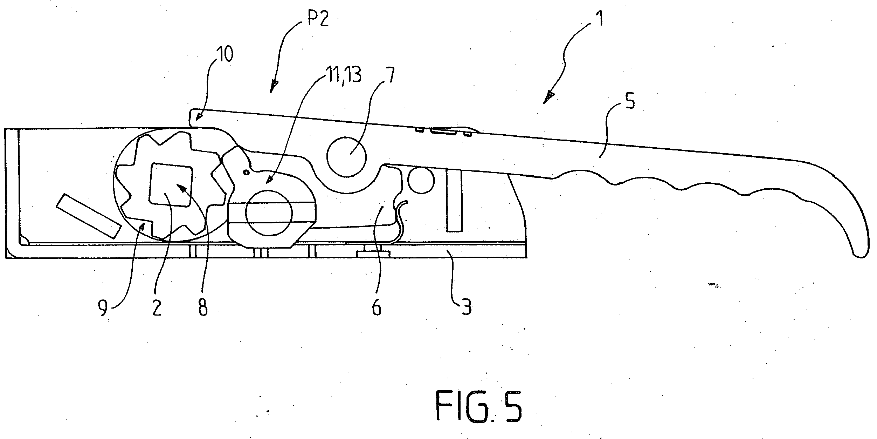

- les figures 5 et 6 sont des vues du dispositif selon la figure 4, illustrant la libération de l'axe d'entraînement lorsque ledit moyen de commande manuel dudit cliquet est actionné,
- la figure 7 est une vue du dispositif selon la figure 4 illustrant la rotation de l'axe d'entrainement lors de l'actionnement de l'organe de manoeuvre dans le premier sens,

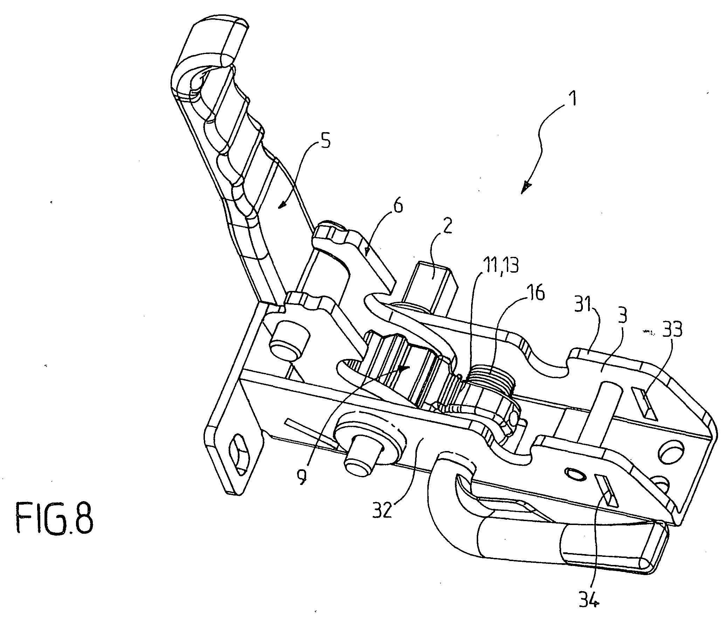

- la figure 8 est une vue en perspective du dispositif lorsque l'organe de manoeuvre est en bout de course,
- la figure 9 est une vue du dispositif selon la figure 4 illustrant la retenue de l'axe d'entrainement par le cliquet anti-retour lorsque l'organe de manoeuvre est actionné dans le sens de retour, dit deuxième sens,
- la figure 10 est une vue du dispositif illustrant plus particulièrement une goupille bloquant le moyen de commande manuel du cliquet dans une première position de blocage où le cliquet bloque en rotation l'axe d'entraînement,
- la figure 11 est une vue du dispositif illustrant plus particulièrement la goupille dans une deuxième position de blocage où la dent et le cliquet laissent libre de rotation l'axe d'entraînement,
- la figure 12 est une vue en perspective du dispositif de la figure 11.

Aussi l'invention concerne un dispositif 1 d'enroulement à commande manuelle d'un élément enroulable, tel qu'une bâche, autour d'un arbre d'enroulement.

Ce dispositif 1 comprend :
- un axe d'entraînement 2,
- un support fixe 3 sur lequel est monté tourillonnant ledit axe d'entraînement 2, notamment destiné à être fixé sur la caisse d'un véhicule,
- un organe de manoeuvre 4 comprenant un premier levier 5 à fonction de poignée et un deuxième levier 6 articulé, d'une part, audit premier levier 5 suivant un premier axe de pivot 7, et d'autre part, audit axe d'entrainement suivant un deuxième axe de pivot 8 d'axe confondu avec l'axe dudit axe d'entraînement 2,
- un mécanisme d'encliquetage apte à permettre la rotation dudit axe d'entraînement 2 dans un seul sens lors de la mise en oscillation dudit organe de manoeuvre 4.

Ce mécanisme d'encliquetage comprend une roue dentée 9, une dent 10 solidaire rigidement dudit premier levier 5 et un cliquet 11, à fonction d'anti-retour.

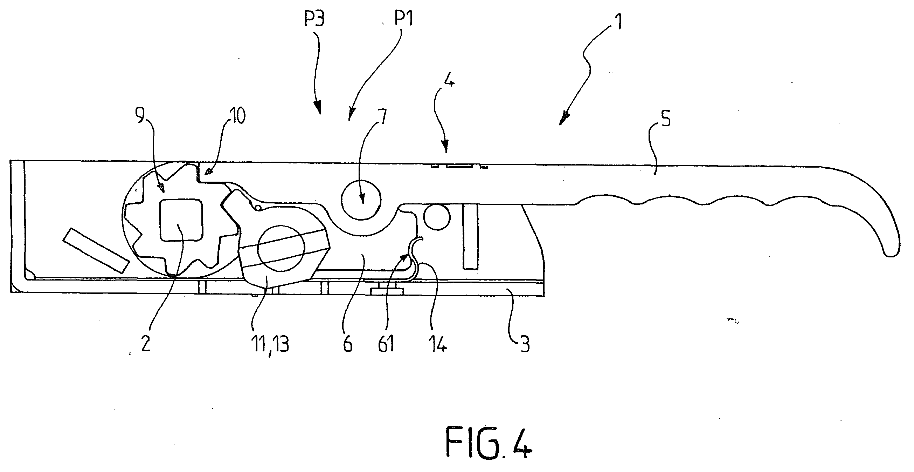

Ladite roue dentée 9 est solidaire en rotation dudit axe d'entraînement 2. La roue dentée 9 et l'axe d'entraînement peuvent être constitués par deux éléments distincts assujettis en rotation l'un à l'autre. A cet effet, l'axe d'entraînement 2 peut comprendre une section polygonale, notamment carrée, reçu au jeu d'emboitement près dans un alésage de section correspondante de la roue dentée 9 (voir figure 4).

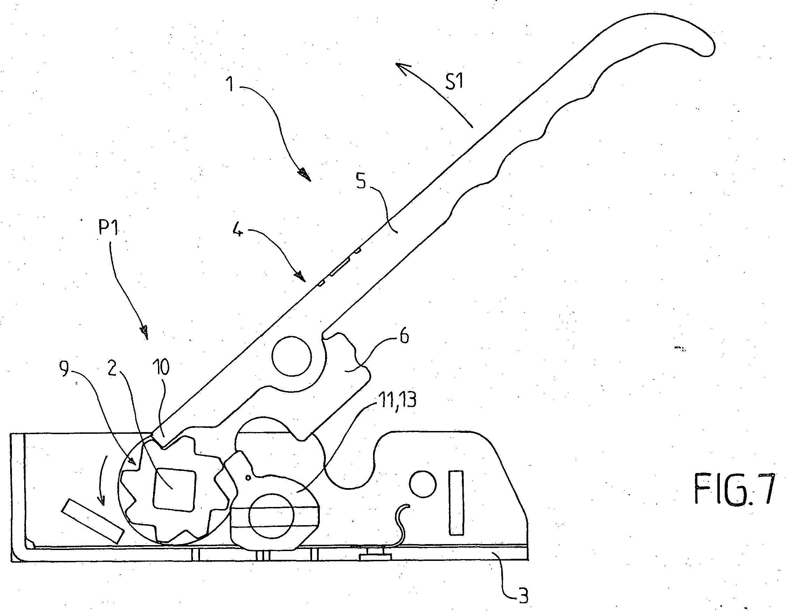

La dent 10 est solidaire rigidement dudit premier levier 5, apte à engrener avec la denture de ladite roue dentée 9 dans une première positon relative dudit premier levier 5 par rapport audit deuxième levier 6, dite position d'engagement du premier levier P1, pour provoquer la rotation de l'axe d'entraînement 2 suivant un premier sens S1 d'actionnement de l'organe de manoeuvre 4 (voir figure 7).

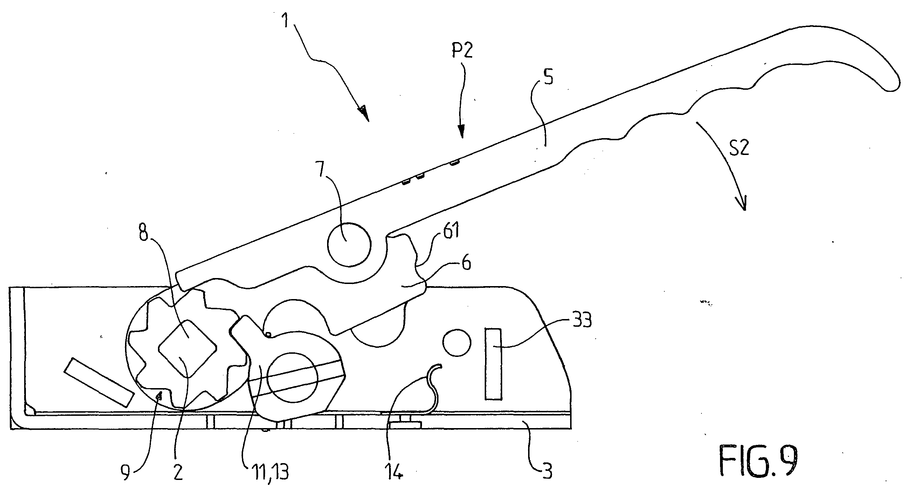

Cette dent 10 est apte à échapper à la denture de la roue dentée 9 dans une deuxième position relative dudit premier levier 5 par rapport audit deuxième levier 6, dite position de débrayage dudit premier levier P2, dans un deuxième sens S2 d'actionnement (sens de retour) de l'organe de manoeuvre 4 (voir figure 9).

Le cliquet 11, à fonction d'anti-retour est notamment solidaire dudit support fixe 3, apte à glisser sur ladite roue dentée 9 lors de l'actionnement de l'organe de manoeuvre 4 dans ledit premier sens S1 d'actionnement (voir figure 7).

Lorsque l'organe de manoeuvre est actionné dans le deuxième sens S2 d'actionnement, ce cliquet 11 est apte à engager avec la denture de la roue dentée 9 pour retenir l'axe d'entraînement 2 (voir figure 9).

Selon le dispositif conforme à l'invention, ledit organe de manoeuvre 4 présente une position de moindre encombrement P3 pour laquelle ledit organe de manoeuvre 4 est rabattu sur ledit support fixe 3 dans une position où la dent 10 dudit premier levier 5 engage avec la denture de ladite roue dentée 9.

Dans cette position de moindre encombrement P3, telle qu'illustrée à la figure 4, la dent 10 et le cliquet 11 engagent avec la denture de la roue dentée 9 pour s'opposer au déroulement dudit élément enroulable.

Le dispositif 1 comprend, en outre, un mécanisme de débrayage dudit mécanisme d'encliquetage comprenant:
- un moyen 12 de commande manuel dudit cliquet, apte à actionner ledit cliquet 11 dans une position d'échappement où ledit cliquet 11 échappe la denture de la roue dentée 9,
- une came 13 actionnée par ledit moyen 12 de commande manuel dudit cliquet, apte à engager avec ledit premier levier 5 pour provoquer l'échappement de la dent 10 de la denture dudit pignon denté 9.

Avantageusement, selon l'invention, dans ladite position de moindre encombrement P3 de l'organe de manoeuvre 4, l'actionnement dudit moyen 12 de commande manuel dudit cliquet provoque conjointement l'échappement de la dent 10 et du cliquet 11 de la denture de la roue dentée 9 de telle façon à libérer en rotation l'axe d'enroulement 12.

Selon le mode de réalisation, non limitatif, illustré aux figures, le cliquet 11 et la came 12 sont constitués par un même élément qui cumule donc une double fonction de came et de cliquet anti-retour.

Par ailleurs, selon cet exemple, le cliquet 11 peut être monté pivotant par rapport au support fixe 3, un moyen ressort 16, notamment un ressort de torsion monté sur l'axe de rotation du cliquet, contraignant le cliquet 11 en engagement avec la roue dentée 9. Le moyen 12 de commande manuel dudit cliquet peut être constitué par une poignée, solidaire rigidement dudit cliquet. Sa mise en rotation provoque solidairement la rotation du cliquet 11.

Selon cet exemple, lorsque le moyen 12 de commande est actionné à partir de la position de moindre encombrement P3 de l'organe de manoeuvre, tel qu'illustré à la figure 4, le cliquet 11 commence à échapper la denture de la roue dentée 9 et simultanément engage avec la paroi inférieure du premier levier 5 pour provoquer son déplacement.

Ce déplacement entraîne le passage du premier levier 5 de ladite position d'engagement P1 dudit premier levier 5 vers ladite position de débrayage dudit premier levier 5 dans laquelle la dent 10 échappe la denture de la roue 9.

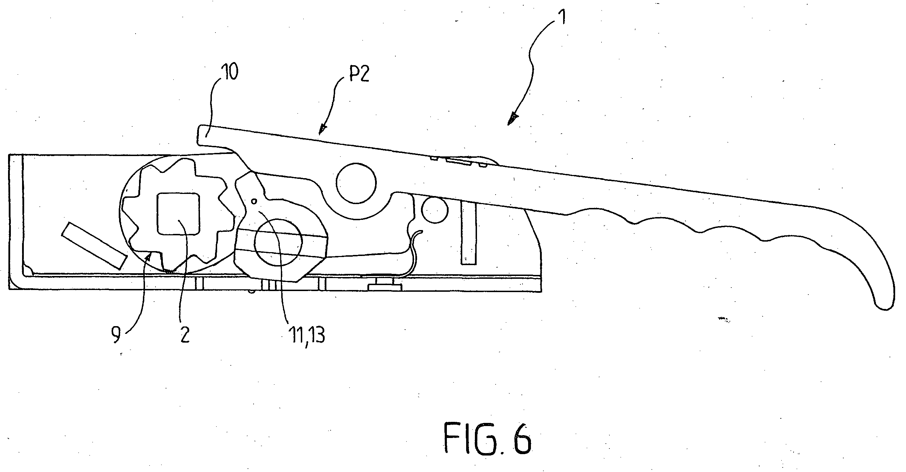

A la position telle qu'illustrée à la figure 6, la dent 10 et le cliquet 11 échappent la denture de la roue dentée 9 : l'axe d'entraînement est alors libre de rotation.

Tel qu'illustré, le support fixe 3 peut comprendre deux flasques 31, 32 entre lesquelles sont logés la roue dentée 9 et ledit cliquet 11, chacun monté pivotant entre les flasques 31, 32. Avantageusement dans la position de moindre encombrement P3, telle qu'illustrée à la figure 4, l'organe de manoeuvre 4 vient recouvrir ledit cliquet 11 qui est alors inaccessible de l'extérieur.

Selon un mode de réalisation illustré, plus particulièrement à la figure 4, ledit second levier 6 peut comprendre une partie concave 61, le dispositif présentant une lame ressort 14 solidaire du support fixe 3, apte à engager avec ladite partie concave 61 pour assurer le maintien stable de l'organe de manoeuvre 4 dans ladite position de moindre encombrement P3.

Avantageusement la conformation de la denture de la roue dentée 9, plus particulièrement son profil, est telle que l'actionnement dudit cliquet 11 depuis sa position de retenue (figure 4) vers sa position d'échappement (figure 6) ne contraint pas le pignon denté 9 en rotation suivant le premier sens S1, à savoir le sens d'enroulement. Cette disposition permet de limiter l'effort nécessaire sur le moyen 12 de commande manuel pour provoquer la libération de l'axe d'entraînement 2, plus particulièrement lorsque la denture de la roue est soumise à de fortes contraintes.

Le dispositif d'enroulement 1 peut comprendre une goupille 15. Lesdites flasques 31, 32 dudit support fixe 3 présentent alors deux ouvertures 33, 34 de passage de la goupille 15 permettant le positionnement de la goupille 15 dans au moins une position P4, P5 où ladite goupille 15 bloque ledit moyen 12 de commande manuel du cliquet dans au moins une position dudit moyen 12.

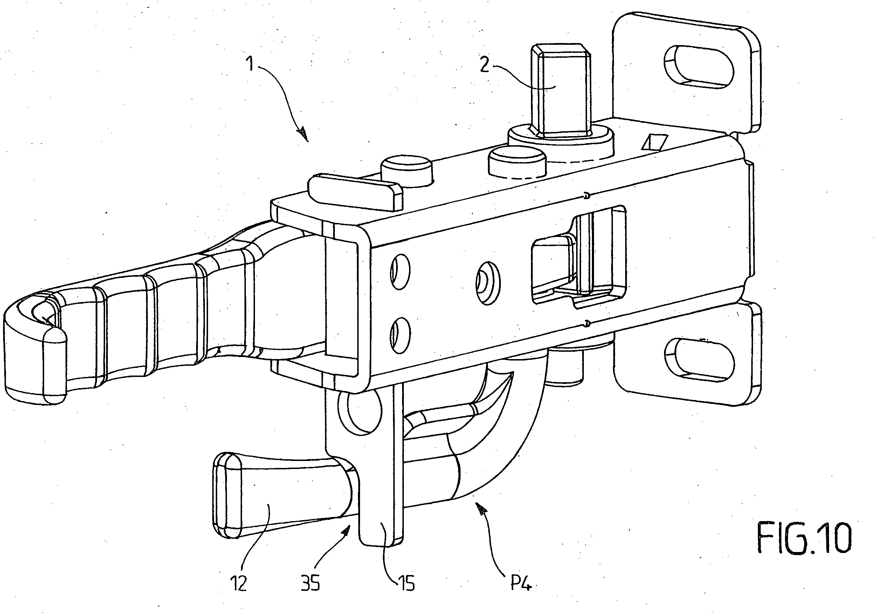

Par exemple, telle qu'illustrée à la figure 10, cette goupille 15 est constituée d'une plaquette dont l'une des extrémités présente une échancrure 35.

Dans une première position relative de la goupille 15 par rapport au support fixe 3, position illustrée à la figure 10, cette goupille 15 permet de bloquer le moyen 12 de commande manuel dudit cliquet dans une position P4 de blocage où le cliquet 11 bloque en rotation l'axe d'actionnement 2. Selon l'exemple, dans cette position P4, l'échancrure 35 est positionnée vers l'extérieur.

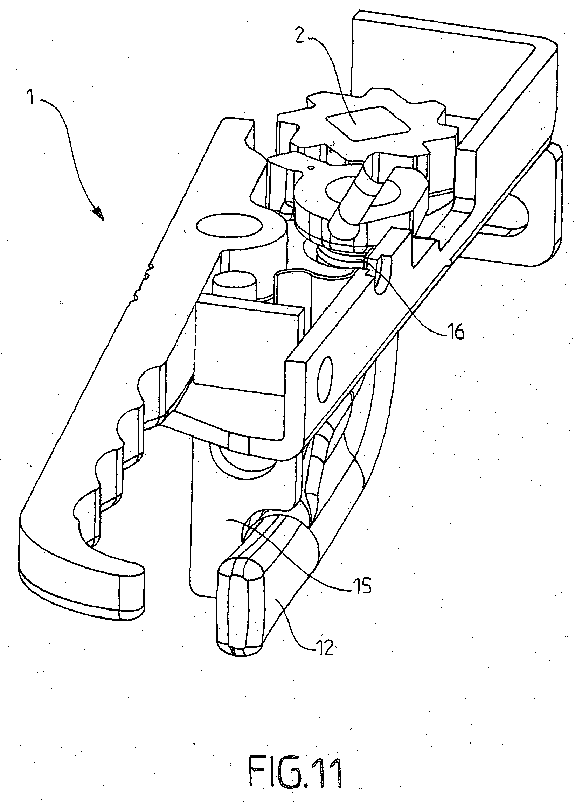

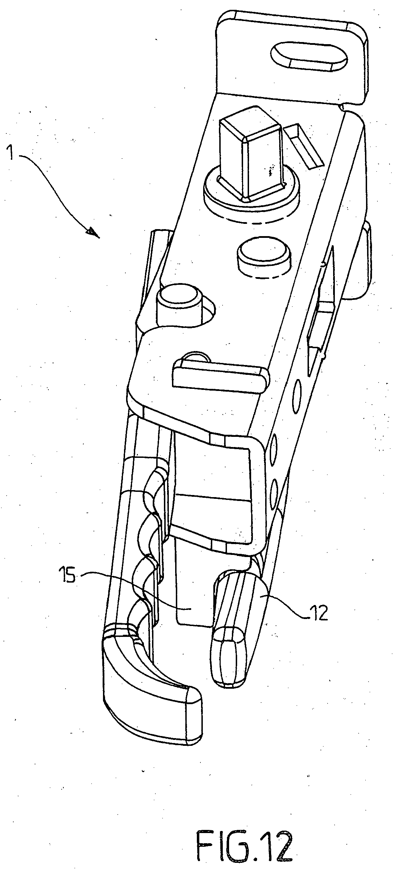

Dans une deuxième position relative de la goupille 15 par rapport au support fixe 3, position illustrée aux figures 11 et 12, cette goupille 15 permet de bloquer le moyen 12 de commande manuel dudit cliquet dans une position P5 de blocage où la dent 10 et le cliquet 11 laissent libre de rotation l'axe d'actionnement 2.

Naturellement d'autres modes de réalisation auraient pu être envisagés par l'homme du métier.

## Revendications

1. Dispositif (1) d'enroulement à commande manuelle d'un élément enroulable, tel qu'une bâche, autour d'un arbre d'enroulement, ledit dispositif (1) comprenant :
- un axe d'entraînement (2),
- un support fixe (3) sur lequel est monté tourillonnant ledit axe d'entraînement (2),
- un organe de manoeuvre (4) comprenant un premier levier (5) à fonction de poignée et un deuxième levier (6) articulé, d'une part, audit premier levier (5) suivant un premier axe de pivot (7), et d'autre part, audit axe d'entrainement suivant un deuxième axe de pivot (8) d'axe confondu avec l'axe dudit axe d'entraînement (2),
- un mécanisme d'encliquetage apte à permettre la rotation dudit axe d'entraînement (2) dans un seul sens lors de la mise en oscillation dudit organe de manoeuvre (4), ledit mécanisme d'encliquetage comprenant :
- une roue dentée (9) solidaire en rotation dudit axe d'entraînement (2),
- une dent (10) solidaire rigidement dudit premier levier (5), apte à engrener avec la denture de ladite roue dentée (9) dans une première positon relative dudit premier levier (5) par rapport audit deuxième levier (6), dite position d'engagement du premier levier (P1), pour provoquer la rotation de l'axe d'entraînement (2) suivant un premier sens (S1) d'actionnement de l'organe de manoeuvre (4), ladite dent (10) étant apte à échapper la denture de la roue dentée (9) dans une deuxième position relative dudit premier levier (5) par rapport audit deuxième levier (6), dite position de débrayage dudit premier levier (P2), dans un deuxième sens (S2) d'actionnement de l'organe de manoeuvre (4),
- un cliquet (11), à fonction d'anti-retour, solidaire dudit support fixe (3), apte à glisser sur ladite roue dentée (9) lors de l'actionnement de l'organe de manoeuvre (4) dans ledit premier sens (S1) d'actionnement, et apte à engager avec la denture de la roue dentée (9) pour retenir l'axe d'entraînement (2) lorsque l'organe de manoeuvre est actionné dans le deuxième sens d'actionnement;
ledit organe de manoeuvre (4) présente une position de moindre encombrement (P3) pour laquelle ledit organe de manoeuvre (4) est rabattu sur ledit support fixe (3) dans une position où la dent (10) dudit premier levier (5) engage avec la denture de ladite roue dentée (9),
et en ce que le dispositif (1) comprend un mécanisme de débrayage dudit mécanisme d'encliquetage comprenant :
- un moyen (12) de commande manuel dudit cliquet, apte à actionner ledit cliquet (11) dans une position d'échappement où ledit cliquet (11) échappe la denture de la roue dentée,
- une came (13) actionnée par ledit moyen (12) de commande manuel dudit cliquet, apte, dans ladite position de moindre encombrement (P3) de l'organe de manoeuvre (4), à engager avec ledit premier levier (5) pour provoquer l'échappement de la dent (10) de la denture dudit roue denté (9),
de telle façon que dans ladite position de moindre encombrement (P3) de l'organe de manoeuvre (4), l'actionnement dudit moyen (12) de commande manuel dudit cliquet provoque conjointement l'échappement de la dent (10) et du cliquet (11) de la denture de la roue dentée (9) de telle façon à libérer en rotation l'axe d'entraînement (2).

2. Dispositif selon la revendication 1, dans lequel le cliquet (11) et la came (12) sont constitués par un même élément.

3. Dispositif selon la revendication 1 ou 2, dans lequel la conformation de la denture de la roue dentée (9) est telle que l'actionnement dudit cliquet (11) depuis sa position de retenue vers sa position d'échappement ne contraint pas le pignon denté (9) en rotation suivant le premier sens S1.

4. Dispositif selon l'une des revendications 1 à 3, dans lequel le cliquet (11) est monté pivotant par rapport au support fixe, un moyen ressort (16) contraignant le cliquet en engagement avec la roue dentée (9).

5. Dispositif selon l'une des revendications 1 à 4, dans lequel ledit moyen (12) de commande manuel dudit cliquet est constitué d'une poignée solidaire dudit cliquet (11).

6. Dispositif selon l'une des revendications 1 à 5, dans lequel le support fixe (3) comprend deux flasques (31, 32) entre lesquelles sont logés la roue dentée (9) et ledit cliquet (11).

7. Dispositif selon la revendication 6, dans lequel dans la position de moindre encombrement (P3), l'organe de manoeuvre (4) vient recouvrir ledit cliquet (11) qui est alors inaccessible de l'extérieur.

8. Dispositif selon l'une des revendications 1 à 7, dans lequel ledit second levier (6) comprend une partie concave (61), le dispositif présentant une lame ressort (14) solidaire du support fixe (3), apte à engager avec ladite partie concave (61) pour assurer le maintien stable de l'organe de manoeuvre (4) dans ladite position de moindre encombrement (P3).

9. Dispositif selon l'une des revendications 1 à 8, comprenant une goupille (15) et dans lequel lesdites flasques (31, 32) dudit support fixe (3) présentent deux ouvertures (33, 34) de passage de la goupille (15) permettant le positionnement de la goupille (15) dans au moins une position (P4, P5) où ladite goupille (15) bloque ledit moyen (12) de commande manuel du cliquet.

10. Dispositif selon là revendication 9, dans lequel la goupille (15) permet de bloquer le moyen (12) de commande manuel dudit cliquet dans une position (P4) de blocage où le cliquet (11) bloque en rotation l'axe d'entraînement (2).

11. Dispositif selon la revendication 9 ou 10, dans lequel la goupille (15) permet de bloquer le moyen (12) de commande manuel dudit cliquet dans une position (P5) de blocage où la dent (10) et le cliquet (11) laissent libre de rotation l'axe d'entraînement (2).

12. Caisse de véhicule de transport de marchandises équipée d'une bâche amovible et d'un dispositif (1) d'enroulement à commande manuelle selon l'une des revendications 1 à 11, apte à permettre l'enroulement de ladite bâche autour d'un arbre d'enroulement et la mise en tension de la bâche.

## Patentansprüche

1. Aufrollvorrichtung (1) mit manueller Steuerung eines aufrollbaren Elements, wie einer Plane, um eine Aufrollwelle, wobei die Vorrichtung (1) umfasst:
- eine Antriebsachse (2),
- einen festen Träger (3), auf dem die Antriebsachse (2) drehbar gelagert ist,
- ein Betätigungselement (4), umfassend einen ersten Hebel (5) mit Grifffunktion und einen zweiten Hebel (6), der einerseits am ersten Hebel (5) entlang einer ersten Schwenkachse (7) und andererseits an der Antriebsachse entlang einer zweiten Schwenkachse (8) mit einer mit der Achse der Antriebsachse (2) zusammenfallenden Achse angelenkt ist,
- einen Rastmechanismus, der geeignet ist, die Drehung der Antriebsachse (2) in nur eine Richtung beim Versetzen des Betätigungselements (4) in Schwingung zu ermöglichen, wobei der Rastmechanismus umfasst:
- ein Zahnrad (9), das mit der Antriebsachse (2) fest verbunden ist,
- einen Zahn (10), der starr mit dem ersten Hebel (5) verbunden und geeignet ist, in die Zahnung des Zahnrades (9) in einer ersten relativen Position des ersten Hebels (5) in Bezug zum zweiten Hebel (6), Eingriffsposition des ersten Hebels (P1) genannt, einzugreifen, um die Drehung der Antriebsachse (2) in eine erste Betätigungsrichtung (S1) des Betätigungselements (4) hervorzurufen, wobei der Zahn (10) geeignet ist, sich aus der Zahnung des Zahnrades (9) in einer zweiten relativen Position des ersten Hebels (5) in Bezug zum zweiten Hebel (6), Entkopplungsposiiton des ersten Hebels (P2) genannt, in einer zweiten Betätigungsrichtung (S2) des Betätigungselements (4) zu lösen,
- eine Rastklinke (11) mit Sperrwirkung, die fest mit dem festen Träger (3) verbunden und geeignet ist, auf dem Zahnrad (9) bei der Betätigung des Betätigungselements (4) in die erste Betätigungsrichtung (S1) zu gleiten, und die geeignet ist, in die Zahnung des Zahnrades (9) einzugreifen, um die Antriebsachse (2) zu halten, wenn das Betätigungselement in die zweite Betätigungsrichtung betätigt wird;
wobei das Betätigungselement (4) eine Position mit geringerem Platzbedarf (P3) aufweist, in der das Betätigungselement (4) auf den festen Träger (3) in eine Position umgelegt ist, in der der Zahn (10) des ersten Hebels (5) in die Zahnung des Zahnrades (9) eingreift,
und dadurch, dass die Vorrichtung (1) einen Entkopplungsmechanismus des Einrastmechanismus aufweist, umfassend:
- ein Mittel (12) zur manuellen Steuerung der Rastklinke, das geeignet ist, die Rastklinke (11) in eine Entkopplungsposition zu bringen, in der sich die Rastklinke (11) aus der Zahnung des Zahnrades löst,
- eine Nocke (13), die von dem Mittel (12) zur manuellen Steuerung der Rastklinke betätigt wird und geeignet ist, in der Position mit geringerem Platzbedarf (P3) des Betätigungselements (4) mit dem ersten Hebel (5) in Eingriff zu gelangen, um die Entkopplung des Zahns (10) aus der Zahnung des Zahnrades (9) hervorzurufen,
so dass in der Position mit geringerem Platzbedarf (P3) des Betätigungselements (4) die Betätigung des Mittels (12) zur manuellen Steuerung der Rastklinke gemeinsam die Entkopplung des Zahns (10) und der Rastklinke (11) aus der Zahnung des Zahnrades (9) hervorruft, um die Antriebsachse (2) in Drehung freizugeben.

2. Vorrichtung nach Anspruch 1, bei der die Rastklinke (11) und die Nocke (12) von einem selben Element gebildet sind.

3. Vorrichtung nach Anspruch 1 oder 2, bei der die Ausbildung der Zahnung des Zahnrades (9) derart ist, dass die Betätigung der Rastklinke (11) von ihrer Halteposition in ihre Entkopplungsposition das Zahnrad (9) nicht zur Drehung in die erste Richtung S1 bewegt.

4. Vorrichtung nach einem der Ansprüche 1 bis 3, bei der die Rastklinke (11) schwenkbar in Bezug zum festen Träger montiert ist, wobei ein Federelement (16) die Rastklinke zum Eingreifen mit dem Zahnrad (9) bringend ist.

5. Vorrichtung nach einem der Ansprüche 1 bis 4, bei der das Mittel (12) zur manuellen Steuerung der Rastklinke von einem mit der Rastklinke (11) fest verbundenen Griff gebildet ist.

6. Vorrichtung nach einem der Ansprüche 1 bis 5, bei der der feste Träger (3) zwei Flansche (31, 32) umfasst, zwischen denen das Zahnrad (9) und die Rastklinke (11) angeordnet sind.

7. Vorrichtung nach Anspruch 6, bei der das Betätigungselement (4) in der Position mit geringerem Platzbedarf (P3) die Rastklinke (11) abdeckt, die nun von außen nicht zugänglich ist.

8. Vorrichtung nach einem der Ansprüche 1 bis 7, bei der der zweite Hebel (6) einen konkaven Abschnitt (61) umfasst, wobei die Vorrichtung ein Federblatt (14) aufweist, das mit dem festen Träger (3) verbunden und geeignet ist, in den konkaven Abschnitt (61) einzugreifen, um den stabilen Halt des Betätigungselements (4) in der Position mit geringerem Platzbedarf (P3) zu gewährleisten.

9. Vorrichtung nach einem der Ansprüche 1 bis 8, umfassend einen Stift (15), wobei die Flansche (31, 32) des festen Trägers (3) zwei Durchgangsöffnungen (33, 34) für den Stift (15) aufweisen, die die Positionierung des Stiftes (15) in mindestens einer Position (P4, P5) ermöglichen, in der der Stift (15) das Mittel (12) zur manuellen Steuerung der Rastklinke feststellt.

10. Vorrichtung nach Anspruch 9, bei der es der Stift (15) ermöglicht, das Mittel (12) zur manuellen Steuerung der Rastklinke in einer Feststellposition (P4) festzustellen, in der die Rastklinke (11) die Antriebsachse (2) in Drehung feststellt.

11. Vorrichtung nach Anspruch 9 oder 10, bei der es der Stift (15) ermöglicht, das Mittel (12) zur manuellen Steuerung der Rastklinke in einer Feststellposition (P5) festzustellen, in der der Zahn (10) und die Rastklinke (11) die Antriebsachse (2) frei drehen lassen.

12. Kasten eines Transportfahrzeugs für Waren, der mit einer abnehmbaren Plane und einer Aufrollvorrichtung (1) mit manueller Steuerung nach einem der Ansprüche 1 bis 11 versehen ist, die geeignet ist, das Aufrollen der Plane um eine Aufrollwelle und das Spannen der Plane zu ermöglichen.

## Claims

1. Manually-controlled winding device (1) of a winding element, such as a tarpaulin, about a winding shaft, said device (1) comprising:
- a drive axle (2),
- a fixed support (3) whereon is mounted revolving said drive axle (2),
- a manoeuvring member (4) comprising a first lever (5) with a handle function and a second lever (6) articulated, on the one hand, to said first lever (5) along a first pivot axle (7), and on the other hand, to said drive axle along a second pivot axle (8) with an axle confounded with the axle of said drive axle (2),
- a ratchet mechanism able to allow for the rotation of said drive axle (2) in a single direction during the putting into oscillation of said manoeuvring member (4), with said ratchet mechanism comprising:
- a toothed wheel (9) integral in rotation with said drive axle (2),
- a tooth (10) rigidly integral with said first lever (5), able to mesh with the gearing of said toothed wheel (9) in a first relative position of said first lever (5) with respect to said second lever (6), referred to as engagement position of the first lever (P1), in order to provoke the rotation of the drive axle (2) according to a first actuating direction (S1) of the manoeuvring member (4), said tooth (10) being able to escape the gearing of the toothed wheel (9) in a second relative position of said first lever (5) with respect to said second lever (6), referred to as disengaged position of said first lever (P2), in a second actuating direction (S2) of the manoeuvring member (4),
- a pawl (11), with an anti-return function, integral with said fixed support (3), able to slide on said toothed wheel (9) during the actuating of the manoeuvring member (4) in the first direction of actuation (S1), and able to engage with the gearing of the toothed wheel (9) in order to retain the drive axle (2) when the manoeuvring member is actuated in the second direction of actuation;
said manoeuvring member (4) has a position of least encumbrance (P3) for which said manoeuvring member (4) is folded back on said fixed support (3) in a position wherein the tooth (10) of said first lever (5) engages with the gearing of said toothed wheel (9),
and in that the device (1) comprises a mechanism for disengaging said ratchet mechanism comprising:
- a mean (12) for manually controlling said pawl, able to actuate said pawl (11) in an escaping position wherein said pawl (11) escapes the gearing of the toothed wheel,
- a cam (13) actuated by said means (12) of manually controlling said pawl, able, in said position of least encumbrance (P3) of the manoeuvring member (4), to engage with said first lever (5) in order to provoke the escaping of the tooth (10) from the gearing of said toothed wheel (9),
in such a way that in said position of least encumbrance (P3) of the manoeuvring member (4), the actuating of said means (12) of manually controlling said pawl jointly provokes the escaping of the tooth (10) and of the pawl (11) from the gearing of the toothed wheel (9) in such a way as to release the drive axle (2) in rotation.

2. Device according to claim 1, wherein the pawl (11) and the cam (12) are comprised of the same element.

3. Device according to claim 1 or 2, wherein the conformation of the gearing of the toothed wheel (9) is such that the actuating of said pawl (11) from its retained position to its escaping position does not constrain the toothed pinion (9) in rotation according to the first direction S1.

4. Device according to one of claims 1 to 3, wherein the pawl (11) is pivotably mounted in relation to a fixed support, with a spring means (16) constraining the pawl in engagement with the toothed wheel (9).

5. Device according to one of claims 1 to 4, wherein said means (12) for manual controlling said pawl is comprised of a handle integral with said pawl (11).

6. Device according to one of claims 1 to 5, wherein the fixed support (3) comprises two flanges (31, 32) between which are housed the toothed wheel (9) and said pawl (11).

7. Device according to claim 6, wherein in the position of least encumbrance (P3), the manoeuvring member (4) covers said pawl (11) which is then inaccessible from the exterior.

8. Device according to one of claims 1 to 7, wherein said second lever (6) comprises a concave portion (61), with the device having a spring blade (14) integral with the fixed support (3), able to engage with said concave portion (61) in order to provide the stable maintaining of the manoeuvring member (4) in said position of least encumbrance (P3).

9. Device according to one of claims 1 to 8, comprising a pin (15) and wherein said flanges (31, 32) of said fixed support (3) have two openings (33, 34) for passing the pin (15) making it possible to position the pin (15) in at least one position (P4, P5) wherein said pin (15) blocks said means (12) for manually controlling the pawl.

10. Device according to claim 9, wherein the pin (15) makes it possible to block the means (12) for manually controlling said pawl in a blocked position (P4) wherein the pawl (11) blocks the drive axle (2) in rotation.

11. Device according to claim 9 or 10, wherein the pin (15) makes it possible to block the means (12) for manually controlling said pawl in a blocked position (P5) wherein the tooth (10) and the pawl (11) leave the drive axle (2) in free rotation.

12. Body of a goods transport vehicle provided with a removable tarpaulin and a manually-controlled device (1) according to one of claims 1 to 11, able to allow for the winding of said tarpaulin about a winding shaft and the tensioning of the tarpaulin.
